# EUROPEAN PATENT APPLICATION

(11) **EP 1 653 637 A1**
(43) Date of publication of application: **03.05.2006**
(21) Application number: 04771368.0
(22) Date of filing: 06.08.2004
(51) Int. Cl.: H04B 7/26

(54) **MOBILE STATION APPARATUS AND RECEIVING METHOD**

(30) Priority: 08.08.2003 JP 2003290701
(71) Applicant: MATSUSHITA ELECTRIC INDUSTRIAL CO., LTD., Kadoma-shi, Osaka 571-8501 (JP)
(72) Inventor: HIRAKI, Toshiaki, Nomi-gun, Ishikawa 929-0121 (JP)
(74) Representative: Grünecker, Kinkeldey, Stockmair & Schwanhäusser Anwaltssozietät
(86) International application number: PCT/JP2004/011369
(87) International publication number: WO 2005/015778

(57) **Abstract**

Amobile station apparatus is provided that performs receive processing efficiently and reduces unnecessary power consumption. In this mobile station apparatus, a signaling detector (71) detects the timing transmit diversity mode of the base station of the HSDPA serving cell changes and reports this change timing to a controller (72). The controller (72) controls an HS-PDSCH receive processor (40) and HS-SCCH receive processor (50) to stop receive processing with respect to the HS-PDSCH sub-frame and HS-SCCH sub-frame corresponding to the change timing.

## Description

### Technical Field

The present invention relates to a mobile station apparatus and a receiving method.

### Background Art

Presently, for mobile communications systems, various discussions are ongoing regarding application of a technology called HSDPA (High Speed Downlink Packet Access) to data transmission between the base station apparatus (hereinafter "base station") and the mobile station apparatus (hereinafter "mobilestation"). HSDPA is a technology for which standardization by 3GPP (3rd Generation Partnership Project) is in progress. HSDPA allows improved downlink throughput from the base station to the mobile station utilizing adaptive modulation, H-ARQ (Hybrid-Automatic Repeat reQuest), high speed selection of communicating mobile stations, and adaptive transmission parameter control in accordance with the conditions of radio channels.

Channels that are commonly used in HSDPA include HS-SCCH (Shared Control Channel for HS-DSCH (High Speed Downlink Shared Channel)), HS-PDSCH (High Speed Physical Downlink Shared Channel), and HS-DPCCH (Dedicated Physical Control Channel (uplink) for HS-DSCH). The HS-SCCH is a downlink control channel formed with sub-frames of three slots each. Control information representing, for example, the modulation scheme for the HS-PDSCH, the number of multi-codes, and the transport block size, is transmitted through the HS-SCCH from the base station to the mobile station. The HS-PDSCH is a downlink data channel formed with sub-frames of three slots each and carries packet data. The HS-DPCCH is an uplink control channel formed with sub-frames of three slots each and carries feedback signals associated with the HS-PDSCH. In an HS-DPCCH sub-frame, an ACK (ACKnowledgement) or NACK (Negative ACKnowledgement) signal for H-ARQ operation is transmitted in the first slot and a downlink CQI (Channel Quality Indicator) is transmitted in the second and third slots. As for the H-ARQ ACK or NACK signal, an ACK signal is transmitted to the base station of the cell providing HSDPA services ("HSDPA serving cell") when the decoding result of the HS-PDSCH associated with the above HS-DPCCH contains no error and is good, and a NACK signal is transmitted when the decoding result contains an error and is no good. The CQI is used to report transmission quality on downlink channels in the reference measurement period to the base station of the HSDPA serving cell. Generally, a CQI represents a number that is associated with transmission quality and that specifies a particular combination of a modulation scheme and coding factor that allow proper demodulation in the mobile station with this transmission quality. The base station performs scheduling with reference to this CQI, determines the mobile station to transmit packet data to through the HS-PDSCH, and transmits the packet data through the HS-PDSCH to this mobile station at a transmission rate in accordance with the CQI. The structures of these channels are disclosed, for example, in non-patent literature 1 below.

Conventional HS-PDSCH receive processing in the mobile station will be described below.
(1) The mobile station receives an HS-SCCH set designated by higher layers and monitors the HS-SCCH set. The HS-SCCH set contains a plurality of HS-SCCHs, and the mobile station monitors them to see if there is an HS-SCCH for the mobile station. When a plurality of mobile stations are present in the HSDPA serving cell, the HS-SCCHs in the HS-SCCH set are transmitted with encoded information representing which mobile station each HS-SCCH is for, thereby allowing the mobile station to detect the HS-SCCH for the mobile station from a plurality of HS-SCCHs received.
(2) Upon detecting in the HS-SCCH set an HS-SCCH for the mobile station, the mobile station starts receiving the HS-PDSCH designated by the control information transmitted in the HS-SCCH. If no HS-SCCH is detected for the mobile station, the mobile station does not receive the HS-PDSCH. The control information includes information as to which mobile station the HS-SCCH is for. In addition, the control information includes the modulation scheme of the HS-PDSCH, the number of multi-codes, and transport block size, as information necessary to receive the HS-PDSCH.
(3) The mobile station performs demodulation, decoding, and error detection (CRC: Cyclic Redundancy Check) with the received HS-PDSCH.
(4) When the error detection result shows no error and is good, the mobile station transmits an ACK signal to the base station of the HSDPA serving cell. When the error correction result shows an error and is no good, the mobile station transmits a NACK signal to the base station of the HSDPA serving cell. The mobile station repeats transmitting an ACK or NACK signal for the number of times designated by signaling from higher layers (i.e. "N_acknack_transmit"). As for the ARQ scheme, HSDPA employs H-ARQ. The receive processing in the mobile station such as described above is disclosed, for example, in non-patent literature 2 below.
Non-patent Document 1: 3GPP TS 25.211 V5.4.0 (3rd Generation Partnership Project; Technical Specification Group Radio Access Network; Physical channels and mapping of transport channels onto physical
channels (FDD) (Release 5))
Non-patent Document 2: 3GPP TS 25.214 V5.5.0 (3rd Generation Partnership Project; Technical Specification Group Radio Access Network; Physical layer procedures (FDD)(Release 5))

### Disclosure of Invention

### Problems to be solved by the Invention

Signaling is given from higher layers to the mobile station that is provided HSDPA services including, for example, the number of ACK or NACK signal retransmissions, compressed mode gap timing (start timing and gap length), the timing the HSDPA serving cell changes, and the timing the base station of the HSDPA serving cell changes transmit diversity mode.

The conventional mobile station detects signaling such as above yet receives the HS-SCCH and HS-PDSCH without taking into account the information represented in the signaling, and so the receive processing is inefficient and consumes unnecessary power.

It is therefore an object of the present invention to provide a mobile station apparatus and receiving method that allow efficient performance of receive processing and reduce unnecessary power consumption.

### Means for solving the problem

In accordance with one aspect of the present invention, a mobile station apparatus has: a first receiver that performs first receive processing including demodulation, decoding, and error detection of a downlink data channel; a second receiver that performs second receive processing including demodulation and decoding of a downlink control channel that carries control information required in the first receive processing; a detector that detects a timing a transmit diversity mode changes in a base station apparatus that transmits the downlink data channel and the downlink control channel; and a controller that stops one or both of the first receive processing and the second receive processing depending on the timing detected in the detector.

By virtue of the above configuration, the present invention stops the first receive processing and/or the second receive processing based on the timing transmit diversity mode changes in the base station apparatus and allows efficient performance of receive processing.

### Advantageous Effect of the Invention

The present invention reduces unnecessary power consumption in the mobile station apparatus.

### Brief Description of Drawings

FIG.1 is a block diagram showing a configuration of a mobile station according to an embodiment of the present invention;
FIG.2 illustrates reception timings of channels in a mobile station according to the present invention; and
FIG.3 is a process flowchart of a mobile station according to the present embodiment.

### Best Mode for Carrying Out the Invention

Assuming that a mobile station is present, in the sub-frame period of an HS-PDSCH, the sub-frame period of an HS-SCCH, and in the slot period one slot before the sub-frame period of the HS-SCCH, HSDPA does not allow the base station of the HSDPA serving cell to change transmit diversity mode in respect to the mobile station. In other words, at the timing transmit diversity mode changes, the mobile station can determine that the HS-PDSCH and HS-SCCH are not transmitted to the mobile station. So, the mobile station of the present embodiment is designed to stop the receive processing of the sub-frame corresponding to the timing transmit diversity mode in the base station of the HSDPA serving cell changes, thereby reducing power consumption. 3GPP provides three transmit diversity modes: (1) no transmit diversity; (2) open loop mode; and (3) closed loop mode. The open-loop mode does not require feedback information from the mobile station and includes STTD (Space-Time Transmit Diversity) and TSTD (Time Switched Transmit Diversity). The closed loop mode controls the phase and amplitude of a signal transmitted from a base station's antenna based on feedback information from the mobile station and includes mode 1 that controls only the phase and mode 2 that controls both the phase and amplitude. Of these, HSDPA switches transmit diversity mode between STTD and the closed loop mode (mode 1).

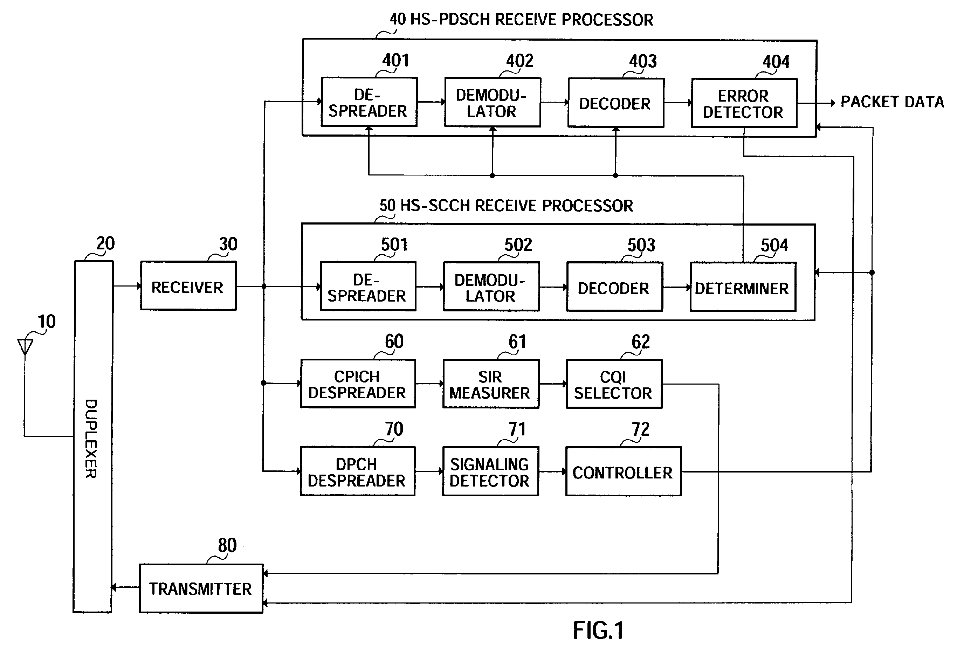

The mobile station apparatus, according to an embodiment of the present invention, will be described below in detail with reference to the accompanying drawings. FIG.1 is a block diagram showing a configuration of a mobile station according to an embodiment of the present invention. In the mobile station shown in FIG.1, a signal transmitted from the base station is received by receiver 30 via antenna 10 and duplexer 20. Receiver 30 performs predetermined radio processing upon this received signal including down-conversion. Received signals after the radio processing are inputted into HS-PDSCH receive processor 40, HS-SCCH receive processor 50, CPICH despreader 60, and DPCH despreader 70. The received signals include an HS-PDSCH signal, HS-SCCH signal, CPICH signal, and DPCH signal.

HS-SCCH receive processor 50 has despreader 501, demodulator 502, decoder 503, and determiner 504, and performs receive processing on the HS-SCCH transmitted from the base station. As for the HS-SCCH, multiple HS-SCCHs are contained in a set (i.e. HS-SCCH set). Each HS-SCCH carries information as to which mobile station the HS-SCCH is for, and carries, in addition, control information that is necessary to receive the packet data transmitted in the HS-PDSCH, including the modulation scheme of the HS-PDSCH, the number of multi-codes, and transport block size. Despreader 501 despreads the HS-SCCHs in the HS-SCCH set using respective, predetermined spreading codes. The HS-SCCHs after the despreading are demodulated in demodulator 502, decoded in decoder 503, and the decoding results are inputted into determiner 504. Given these decoding results, determiner 504 determines whether or not there is an HS-SCCH for the mobile station among the multiple HS-SCCHs in the HS-SCCH set. If as a result of determination there is an HS-SCCH for the mobile station, determiner 504 sends spreading code information including the number of multi-codes to despreader 401, modulation scheme information including the modulation scheme to demodulator 402, and coding information including the transport block size to decoder 403, all represented in the control information of the HS-SCCH.

HS-PDSCH receive processor 40 has despreader 401, demodulator 402, decoder 403, and error detector 404, and performs receive processing on the HS-PDSCH transmitted from the base station. The HS-PDSCH carries packet data formed with information bits. In accordance with the spreading code information from determiner 504, despreader 401 despreads the HS-PDSCH. The HS-PDSCH after the despreading is demodulated in demodulator 402 in accordance with the modulation scheme information from determiner 504 and decoded in decoder 403 in accordance with the coding information from determiner 504, and the decoding result (i.e. packet data) is inputted in error detector 404. Error detector 404 performs error detection such as CRC with the packet data inputted. Error detector 404 then generates an ACK signal or NACK signal depending on the error detection result and inputs the signal in transmitter 80. When the packet data contains no error and is good, error detector 404 generates and inputs to transmitter 80 an ACK signal as a response signal in response to the error detection. When the packet data contains an error and is no good, error detector 404 generates and inputs to transmitter 80 a NACK signal as a response signal in response to the error detection. Transmitter 80 transmits the ACK/NACK signal to the base station via the HS-DPCCH.

CPICH despreader 60 despreads the CPICH using a predetermined spreading code. The CPICH carries the pilot signal. The CPICH after the despreading is inputted into SIR measurer 61. SIR measurer 61 measures the SIR (Signal to Noise Ratio) as the reception quality of the pilot signal, and inputs the SIR value in CQI selector 62. CQI selector 62 has a table in which multiple SIR values and CQIs are associated. With reference to this table, CQI selector 62 selects a CQI associated with the SIR value inputted from SIR measurer 61 and inputs this CQI in transmitter 80. The received SIR value of the pilot signal represents downlink transmission quality. Accordingly, when a great SIR value is measured, a CQI that is associated with a high transmission rate is selected. Transmitter 80 transmits the inputted CQI to the base station via the HS-DPCCH.

DPCH despreader 70 despreads the DPCH using a predetermined spreading code. The DPCH carries signaling fromhigher layers. Bymeans of this signaling, the mobile station is reported the number of ACK/NACK signal retransmissions, gap timing on uplink channels in compressed mode (start timing and gap length), the timing the HSDPA serving cell changes, and the timing the base station of the HSDPA serving cell changes transmit diversity mode. The DPCH after the despreading is inputted in signaling detector 71. According to the above-described signaling in the despread DPCH, signaling detector 71 detects the timing transmit diversity mode of the base station of the HSDPA serving cell changes, and reports this change timing to controller 72.

Depending on the timing of the change of transmit diversity mode detected in signaling detector 71, controller 72 stops the receive processing of particular sub-frames. To be more specific, this is done as follows:

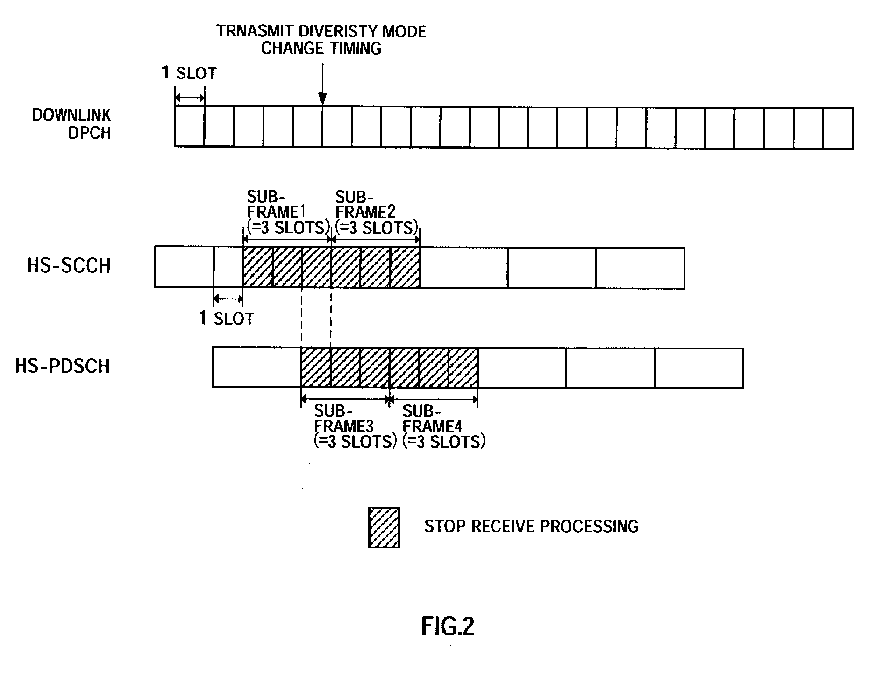

FIG.2 illustrates reception timings of channels in the mobile station according to the present embodiment. HS-SCCH sub-frames and HS-PDSCH sub-frames are formed with three slots each. As for the relationship between an HS-PDSCH and the HS-SCCH associated with the HS-PDSCH (i.e. the HS-SCCH carrying the control information that is necessary to receive the HS-PDSCH), the first slot in an HS-PDSCH sub-frame overlaps with the last slot in an HS-SCCH sub-frame. In other words, at the timing one slot before an HS-SCCH sub-frame reception end timing, a sub-frame of the HS-PDSCH associated with the HS-SCCH starts being received.

Assume now that signaling detector 71 detects that transmit diversity mode of the downlink DPCH from the base station of the HSDPA serving cell changes at the timing shown in FIG.2. In this case, the transmit diversity mode change timing overlaps the last slot of sub-frame 1 of the HS-SCCH shown in FIG.2 and is in the sub-frame period of sub-frame 1. Controller 72 determines that the HS-SCCH is not going to be transmitted to the mobile station during this sub-frame period and controls HS-SCCH receive processor 50 to stop receive processing with respect to sub-frame 1. That is to say, controller 72 stops receive processing with respect to a sub-frame of the HS-SCCH when the timing transmit diversity mode changes comes within its sub-frame period.

In addition, the transmit diversity mode change timing overlaps the first slot of sub-frame 3 of the HS-PDSCH shown in FIG.2 and is in the sub-frame period of sub-frame 3. Controller 72 determines that the HS-PDSCH is not going to be transmitted to the mobile station during this sub-frame period and controls HS-PDSCH receive processor 40 to stop receive processing with respect to sub-frame 3. That is to say, controller 72 stops receive processing with respect to a sub-frame of the HS-PDSCH when the timing transmit diversity mode changes comes within its sub-frame period.

In addition, the transmit diversity mode change timing overlaps the slot one slot before the sub-frame period of sub-frame 2 in the HS-SCCH shown in FIG.2 (i.e. the last slot of sub-frame 1). Controller 72 determines that the HS-SCCH is not going to be transmitted to the mobile station during the sub-frame period of sub-frame 2 and controls HS-SCCH receive processor 50 to stop receive processing with respect to sub-frame 2. That is to say, controller 72 stops receive processing with respect to a HS-SCCH sub-frame when the timing transmit diversity mode changes comes within the slot period one slot before the sub-frame period. However, the slot period is by no means limited to a one-slot earlier one such as described above. If it is not allowed to change transmit diversity mode within a slot period N slots (where N is a natural number) before an HS-SCCH sub-frame period, controller 72 stops receive processing with respect to the HS-SCCH sub-frame if the timing transmit diversity mode changes comes within the slot period N slots before the sub-frame period.

Upon stopping the receive processing of sub-frame 2, controller 72 determines that the control information that was supposed to be transmitted in sub-frame 2--that is, the control information that was necessary to receive sub-frame 4 of the HS-PDSCH shown in FIG.2--is not going to be transmitted, and controls HS-PDSCH receive processor 40 to stop receive processing with respect to sub-frame 4 that cannot be received without that control information. That is to say, controller 72 stops receive processing with respect to the HS-PDSCH sub-frame the receive processing of which is going to be performed using the control information that is transmitted in the HS-SCCH sub-frame, the receive processing of which is now stopped.

As for the manner of stopping receive processing, HS-PDSCH receive processor 40 may stop the entire processing including despreading, demodulation, decoding, and error detection, or stop one or some of these. Likewise, HS-SCCH receive processor 50 may also stop all processing including despreading, demodulation, decoding, and determination, or stop one or some of these. Although a case has been described above with the present embodiment where both HS-PDSCH receive processing and HS-SCCH receive processing stop, the present invention is by no means limited to this and it is equally possible to stop one of them.

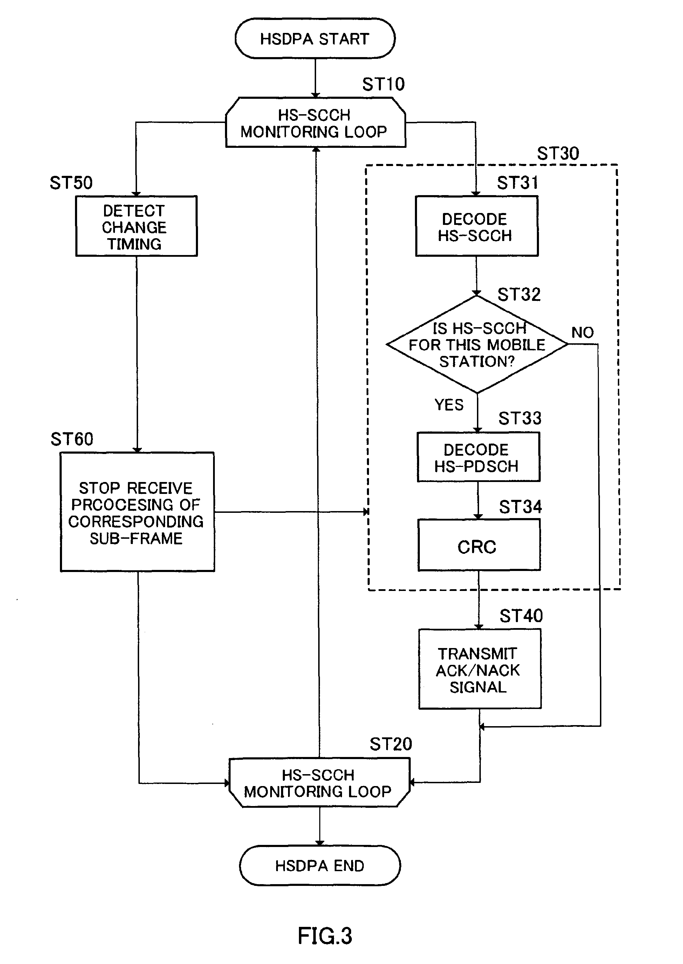

Next, the process flow of the mobile station according to the present embodiment will be described below with reference to FIG.3. Once HSDPA starts, the mobile station repeats the series of processing from step (hereinafter "ST") 10 to ST20 (i.e. HS-SCCH monitoring loop) until HSDPA ends. In the HS-SCCH monitoring loop, the mobile station receives and monitors the HS-SCCH set designated from higher layers. In other words, the mobile station decodes a plurality of HS-SCCHs contained in the HS-SCCH set (ST31) and monitors them to see whether these HS-SCCHs contain one for the mobile station (ST32). When there is no HS-SCCH for the mobile station (ST32 "NO"), the mobile station moves onto ST20 and continues monitoring the HS-SCCHs. On the other hand, when there is an HS-SCCH for the mobile station (ST32 "YES"), the mobile station decodes the HS-PDSCH in accordance with the control information transmitted in the HS-SCCH for this mobile station and performs checking with the packet data of the decoding result (ST34). The mobile station then generates an ACK signal or NACK signal depending on the CRC result and transmits the signal to the base station of the HSDPA serving cell (ST40). ST31-ST34 in the flowchart of FIG.3 make up the receive processing for the HS-SCCH and HS-PDSCH (ST30).

Meanwhile, the mobile station performs the processing of ST50 and ST60 in parallel with the processing of ST30. That is, the mobile station detects the timing transmit diversity mode changes from signaling from higher layers (ST50). Then, as described above, the mobile station stops the series of receive processing of ST30 for the sub-frame corresponding to the change timing. After the receive processing stops, the mobile station moves onto ST20 and continues monitoring the HS-SCCHs.

The present embodiment is thus designed to stop unnecessary receive processing of the HS-SCCH and HS-PDSCH, thereby reducing unnecessary power consumption in the mobile station.

The present application is based on Japanese Patent Application No.2003-290701, filed August 8, 2003, entire content of which is expressly incorporated herein by reference.

### Industrial Applicability

The present invention is applicable for use in a mobile station apparatus used in a mobile communication system of a W-CDMA scheme.

## Claims

1. A mobile station apparatus comprising:
a first receiver that performs first receive processing of a downlink data channel, including demodulation, decoding, and error detection;
a second receiver that performs second receive processing of a downlink control channel that carries control information required in the first receive processing, including demodulation and decoding;
a detector that detects a timing a transmit diversity mode changes in a base station apparatus that transmits the downlink data channel and the downlink control channel; and
a controller that stops one or both of the first receive processing and the second receive processing depending on the timing detected in the detector.

2. The mobile station apparatus of claim 1, wherein, when the timing comes in a sub-frame period of a sub-frame of the downlink data channel, the controller stops the first receive processing with respect to said sub-frame of the downlink data channel.

3. The mobile station apparatus of claim 1, wherein, when the second receive processing is stopped with respect to a sub-frame of the downlink control channel, the controller stops the first receive processing with respect to a sub-frame of the downlink data channel the first receive processing of which is performed using control information transmitted in said sub-frame of the downlink control channel.

4. The mobile station apparatus of claim 1, wherein, when the timing comes in a sub-frame period of a sub-frame of the downlink control channel, the controller stops the second receive processing with respect to said sub-frame of the downlink control channel.

5. The mobile station apparatus of claim 1, wherein, when the timing comes in a slot period N slots before a sub-frame period of a sub-frame of the downlink control channel, the controller stops the second receive processing with respect to said sub-frame of the downlink control channel, said N being a natural number.

6. A receiving method comprising:
performing first receive processing of a downlink data channel, including demodulation, decoding, and error detection;
performing second receive processing of a downlink control channel that carries control information required in the first receive processing, including demodulation and decoding;
detecting a timing a transmit diversity mode changes in a base station apparatus that transmits the downlink data channel and downlink control channel; and
stopping one or both of the first receive processing and second receive processing depending on the timing.
